# EUROPEAN PATENT SPECIFICATION

(11) **EP 4 255 669 B1**
(45) Date of publication and mention of the grant of the patent: **20.11.2024**
(21) Application number: 21830953.2
(22) Date of filing: 01.12.2021
(51) Int. Cl.: B23Q 17/09, B23Q 17/22

(54) **SYSTEM FOR CHECKING THE INTEGRITY OF A TOOL**
SYSTEM ZUR ÜBERPRÜFUNG DER INTEGRITÄT EINES WERKZEUGS
SYSTÈME DE VÉRIFICATION DE L'INTÉGRITÉ D'UN OUTIL

(30) Priority: 03.12.2020 IT 202000029600; 03.12.2020 IT 202000029609; 03.12.2020 IT 202000029618
(43) Date of publication of application: 11.10.2023
(73) Proprietor: Marposs Societa' Per Azioni, 40010 Bentivoglio (BO) (IT)
(72) Inventor: GAMBINI, Antonio, 56028 SAN MINIATO BASSO (PI) (IT); FORNI, Alessandro, 40017 S. GIOVANNI IN PERSICETO (IT)
(86) International application number: PCT/EP2021/083739
(87) International publication number: WO 2022/117632

(56) References cited:
- GB-A- 2 172 224
- JP-A- S5 337 055
- US-A- 4 203 691

## Description

### TECHNICAL FIELD

The present invention relates to a system for checking the integrity of a metal tool present in a machine tool, and finds a particularly advantageous application in the check of rotating tools coupled to the spindles of machine tools such as drilling and milling machines for processing metal workpieces.

### BACKGROUND ART

In the mechanical machining with chip removal with machine tools, checking the integrity of the tool that performs the machining is extremely important. In particular, in working processes employing an elongated rotating tool coupled to a spindle, it is important to check whether, during the working process, the tool is intact or has broken, in order to avoid to carry out improper and dangerous operations. This requirement, which exists for every type of tool, is particularly critical in the case of very small tools, which by their very nature are more subject to breakage. For example, during milling and drilling operations, identifying and notifying in a timely manner, substantially in real time, any breakage or damage suffered by the tool allows to avoid improper machining that gives rise to waste pieces, saving in this way the total production time. The notification also allows to quickly and automatically replace the damaged tool in a timely manner. This problem is also present in case of tools which do not rotate and which in any case have an approaching movement to the workpiece (the latter typically rotating) as happens, for instance, on a lathe.

Different kinds of systems are known for checking the integrity of the tool, for example by means of optical devices such as the one shown in patent US-A-4502823, or by means of sensors that detect variations in physical quantities (force, vibrations, ...) directly linked to the stress of the tool on the workpiece during machining, or with various combinations of sensors and measuring and checking devices (see for example patent US-A-6161055).

Inductive-type systems are also known which comprise circuit elements typically connected near the spindle of the machine tool, for example a milling machine or a drilling machine, and which detect variations caused in these circuit elements by the contact between the metal tool and the - also metallic - processed workpiece. The circumstances in which this contact is detected or not provide information on the integrity of the tool.

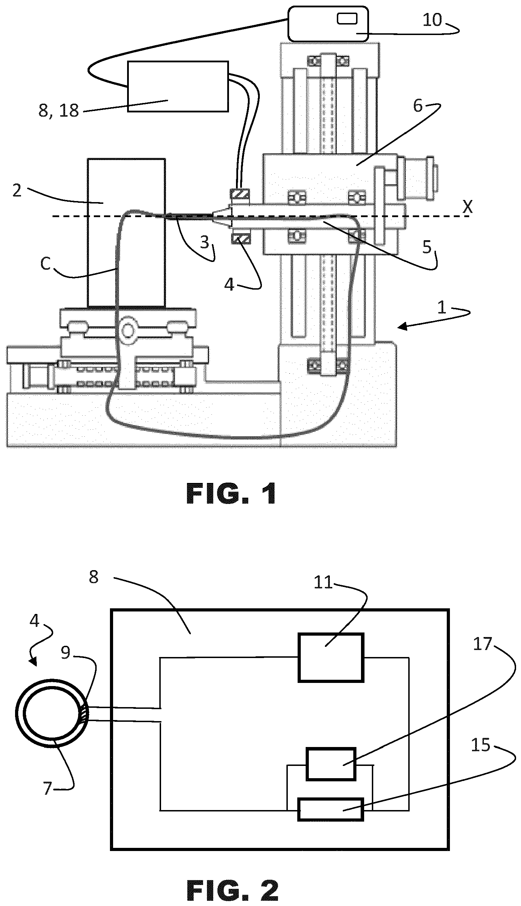

Patent US-A-4203691 shows and describes a system of this type, similar to the known system of figure 1. Figure 1 schematically shows a machine tool, for example a drilling machine, for machining a metal workpiece 2, with a support structure 1 which comprises a spindle 6, a tool holder with a shaft 5 rotating around a rotation axis X, coupled to the spindle 6 by means of bearings, and a rotating tool 3 aligned along the axis X and connected to the spindle, the spindle 6 and the workpiece 2 being mutually movable along the direction defined by the rotation axis X of the shaft 5. An inductor 4 comprising a winding wound on a portion of an annular core made of ferromagnetic material arranged near the tool holder, around the rotation axis X, in particular disposed externally and coaxially to the rotating shaft 5, is part of a detection circuit or primary circuit which also includes elements of a module 8 (figure 2). The module 8 includes a power source, in particular an alternating current generator 11, a resistor 15 and a voltage or voltage variation detector 17 across the resistor 15.

When the rotating tool 3 comes into contact with the metal processed workpiece 2, a secondary circuit C defined by a loop which includes the tool 3, the rotating shaft 5, the support structure 1 and the metal workpiece 2 is closed. The closure of the secondary circuit C causes a variation of the inductance parameters and a consequent variation of the voltage across the resistor 15, the latter being detected by the detector 17. If the tool 3 is broken, the contact does not occur, or at least it does not occur when it should do, and consequently no variation of the inductance parameters is detected. The module 8 is connected to a control unit 10 which controls the movements of the different parts of the machine tool, for example a PLC programmable unit, which checks whether, in correspondence with the mutual position between tool and workpiece at which the machining should start, the contact is detected or not, that is whether or not a detection signal has been received by the detection circuit comprising the inductor 4. If not, an alarm signal is generated, the processing is stopped and other known procedures are initiated, such as the automatic replacement of the damaged tool with an intact one taken from a suitable repository.

A problem that may occur in known systems is the difficulty of properly detecting the contact between tool and workpiece in case that this contact is not maintained during the whole processing, but occurs in limited periods of time, only. This is the case, for example, of machining processes in which the metal chip breaks causing a loss of contact for intervals of time that cannot always be predictable and of milling operations, in which the rotating tool intermittently touches the workpiece that is working. In particular, the tool has cutting edges that, during a rotation of 360°, touch the piece for rotation angles of limited amplitude, for example of 5° or less. Considering the high rotation speeds of the tool, the contact time between the tool and the workpiece can be less than 5 microseconds. In these cases, the known detection circuits and systems do not allow to detect the inductance variations caused by the short contacts between the cutting edges and the workpiece, and as a consequence are not very reliable. This is especially true in case of very small tools, with diameter values of about one millimeter, where the contacts are very light and of very short duration.

Another problem of the system of figure 1 is the difficulty in detecting the contact between the tool and the workpiece, in particular the voltage variation across the resistance of the detector, for example due to the relatively high resistance of the secondary circuit C when the shaft 5 rotates. Such resistance can vary and increase considerably by virtue of the dynamic behaviour of the bearings and/or of the presence of lubricants. This problem can also arise if in the path that defines the secondary circuit there are elements of low or zero electrical conductivity, for example when the bearings are made of ceramic material. To overcome this problem the aforementioned patent US-A-4203691 describes a solution according to which, in the secondary circuit, the electrical connection between the rotating shaft and the support structure of the machine tool is made by means of suitable sliding contacts which allow to avoid, that is to go around, the area in which the bearings are present.

This solution is an improvement with respect to that of figure 1. However, the embodiment illustrated in US-A-4203691 with brushes connected to the support structure that touch a ring connected to the rotating part can present problems and not guarantee an electrical connection that is effective and reliable in time.

A further problem of the system illustrated in figure 1 and in the aforementioned patent US-A-4203691 is the substantial impossibility of physically applying the inductor with the annular core in existing machine tools where the access to the area around the spindle is hindered by other parts of the machine or is otherwise limited.

### DISCLOSURE OF THE INVENTION

The purpose of the present invention is to provide a system for checking the integrity of the tool that is reliable and overcomes the problems of the known systems, allowing to obtain reliable results even in those cases in which the tool, or the machine tool where the tool is used, have mechanical, electrical or application features that make impossible or of uncertain outcome the checking with known systems.

This and other objects and advantages are achieved by a system according to the attached claims, which describe embodiments of the present invention and form an integral part of the present description.

A system for checking the integrity of a tool according to the present invention comprises a detection circuit which generates a detection signal indicative of the contact between the tool and the metal piece machined on the machine tool, and a control unit connected to the detection circuit. The detection circuit comprises an inductor with an annular core arranged near a tool holder of the machine tool and windings wound on the annular core. The detection circuit has a half-bridge configuration with two resistive branches powered by AC excitation voltages that are substantially 90° out of phase with each other and respectively comprising the inductor and a reference resistor which preferably has a resistance substantially equal to the impedance of the inductor, and a detection branch with a conversion unit, typically an RMS converter, and a processing unit for generating and transmitting the detection signal to the control unit.

Objects and advantages of the present invention will become clear from the detailed description which follows.

### BRIEF DESCRIPTION OF THE DRAWINGS

The present invention will now be described with reference to the attached drawings, which represent exemplary and non-limiting embodiments thereof, in which:
figure 1 is a schematic view of a machine tool with a system for checking the integrity of a tool;
figure 2 is a schematic illustration of components of a system for checking the integrity of a tool according to a known embodiment;
figure 3 is a schematic illustration of components of a system for checking the integrity of a tool according to the present invention;
figure 4 is a graphical representation of the trend of electrical signals during the operation of the checking system of figure 3;
figure 5 is a schematic view of a machine tool with a system for checking the integrity of a tool according to the invention;
figure 6 is an enlarged longitudinal section of some components of the checking system of figure 5;
figure 7 is a perspective view of one of the components of figure 6;
figure 8 is a cross section of figure 6, showing the component of figure 7;
figure 9 is a perspective, partial view of some components of a system for checking the integrity of a tool according to the invention;
figure 10 is a sectioned perspective view of a component of the invention; and
figure 11 is a perspective view of a part of the component of figure 10.

### BEST MODES FOR CARRYING OUT THE INVENTION

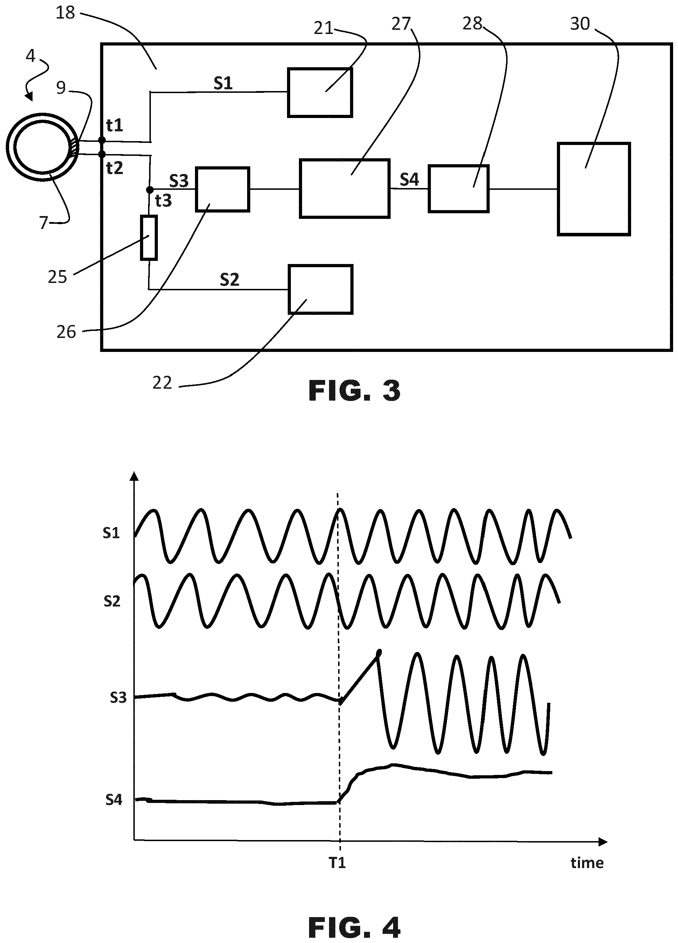

A detection circuit or primary circuit that is part of a system for checking the integrity of a tool, or tool integrity checking system, according to the present invention including the features of figure 1, is shown in figure 3. The primary circuit comprises the inductor 4, with a core 7 of ferromagnetic material (for example ferrite) having an annular, for example toroidal, shape and windings 9 which are connected to terminals t1 and t2 of a power supply and processing module 18 connected to these terminals t1 and t2.

The module 18 includes
- two power sources, in particular voltage generators 21 and 22 which respectively supply two AC excitation voltages S1 and S2, substantially out of phase by 90° with respect to each other, shown in the graph of figure 4,
- a reference resistor 25 whose resistance is substantially equal to the impedance in ohms of the inductor 4, and
- a detection branch with a filter 26, a conversion unit, in particular an effective value detector, or RMS ("Root Mean Square") converter 27, an analog-to-digital converter 28, and a processing unit, in particular a microprocessor, 30.

A node t3 leads to the detection branch and also to a first resistive branch or excitation branch - comprising the generator 21 and, through the terminals t1 and t2, the windings 9 of the inductor 4 - and a second resistive branch or excitation branch with the generator 22 and the resistor 25. The excitation and detection branches thus define a half-bridge configuration.

In the absence of contact between the tool and the workpiece, the secondary circuit is open.

Thanks to the choice of the resistor 25, as mentioned above, and to the appropriate phase shift between the voltages S1 and S2, substantially of 90°, the voltage S3 at the node t3 has a negligible amplitude. Consequently, the output signal from the filter 26 (where unwanted disturbances and frequencies are eliminated or attenuated) and the "averaged" signal S4, at the output of the RMS converter 27, have a substantially constant trend, without significant variations in amplitude (figure 4, trend before the instant T1).

When, at the instant T1, the tool 3 touches the workpiece 2, the loop C comprising the tool 3, the workpiece 2, the tool holder with the rotating shaft 5, and the support structure 1 of the machine tool comprising the spindle 6, closes. In this loop C, that is in the secondary circuit linked to the inductor 4, a current is induced which in turn causes a variation in the current which passes through the windings 9 of the inductor 4 and, consequently, in the voltage S3 in correspondence of the node t3. Thanks to the half-bridge configuration of the circuit, the signal S3 can have a high crest factor. This occurs in particular when the contact between the tool 3 and the workpiece 2 is intermittent and for short or very short periods of time (for example if the tool 3 is a small cutter) and the consequent variations caused in the electrical circuit through the inductor 4 are short or very short. The signal S3 is thus able to follow these short and fast variations.

The RMS converter 27 typically has a very low average time constant, for example about 30 microseconds. This makes it possible to obtain a very rapid response to the variations of the signal output from the filter 26 which in turn reflects substantially in real time the variations of the signal S3 at the node t3 of the half-bridge circuit, variations which, on the basis of the foregoing above, can be very short and fast.

The signal S4 at the output of the RMS converter 27 is an always positive signal, cleaned of the electrical noise present in the signal at the output of the filter 26. In this way it is possible to capture very limited duration variations of the signal S3 indicative of short contacts between the tool 3 and the piece 2, as occurs for example in milling operations or in processes in which the metal chip breaks causing loss of contact for time intervals that are generally unpredictable.

The signal S4 is converted into a digital signal in the converter 28 and the digital signal obtained is read by the microprocessor 30 where it is processed in a known way, for example it is compared with a threshold value, the exceeding of which indicates that the contact has occurred, with the consequent generation of a detection signal. The detection signal is transmitted to the control unit 10 to confirm the correct presence of the operating tool 3. If the tool 3 is broken, the loop C does not close and no signal is sent to the control unit 10. If the microprocessor 30 of the module 18 fails to receive the signal of the contact in correspondence with a mutual position between spindle 6 and metal workpiece 2 in which machining should begin, the control unit 10 stops the movements of the machine tool and possibly starts the automatic tool replacement operations which occur in a manner known per se and not described here. The microprocessor 30 can carry out further processing before transmitting to the control unit 10 the detection signal indicating the presence of the tool 3. For example, in the case of check during a milling operation, the microprocessor 30 can check whether the tool is present and intact by recording the succession of contacts between the cutting edges and the workpiece and comparing the duration and frequency of these contacts with theoretical or predetermined values relating to the specific machining (type of tool used, rotation speed, cutting parameters such as removal and advancement, etc.).

The half-bridge configuration of the secondary circuit which includes the inductor 4 and the use of a suitable conversion unit such as the RMS converter 27 allow to obtain a high signal/noise ratio and a considerable sensitivity in detecting variations in electrical characteristics of the same circuit. In particular, the signal S3 present at the terminal t3 of the half-bridge configuration can have a high crest factor, i.e. it is able to follow fast variations of the electrical characteristics caused in the inductor 4 by the contact between the tool 3 and the metallic workpiece 2, and the RMS converter 27 is in turn capable of detecting such fast variations and providing a signal S4 with a high signal-to-noise ratio. It is thus possible to detect even very small and rapidly vanishing variations of electrical characteristics caused by light contacts (as happens, for example, for very small tools, even 0.1 mm small in diameter) and of very short duration (for example short and intermittent contacts in case of milling machines with tools having a diameter of less than 1 mm). In a system according to the present invention, the inductor 4 can be arranged in a different position with respect to what is shown in figure 1, for example it can be placed, always near the tool holder or around the shaft 5, but inside the spindle 6, for example in an intermediate position between the bearings.

The presence of the filter 26 is not essential, even if it is advantageous for eliminating or attenuating unwanted frequencies which would interfere in a negative way with the proper processing of the useful signals.

A different embodiment of the present invention may comprise a conversion unit other than the RMS converter 27, for example a peak-to-peak detector, even though the RMS converter provides better results, since, in addition to providing a (further) filter, it provides an always positive signal that, as already mentioned, is particularly quick to reflect the variations in input.

A further, different solution does not provide for the conversion of the signal into digital, even though the presence of the converter 28 guarantees, also in this case, the considerable advantages - known per se - deriving from the particular flexibility of digital processing when compared with that of an analog signal.

The description above refers to the check of a rotating tool. However, the system according to the present invention can also be applied to the check of a tool that does not rotate, for example a tool connected to the turret of a lathe that can move with respect to a rotating piece being machined, for example along a direction corresponding to the axis X of the figures.

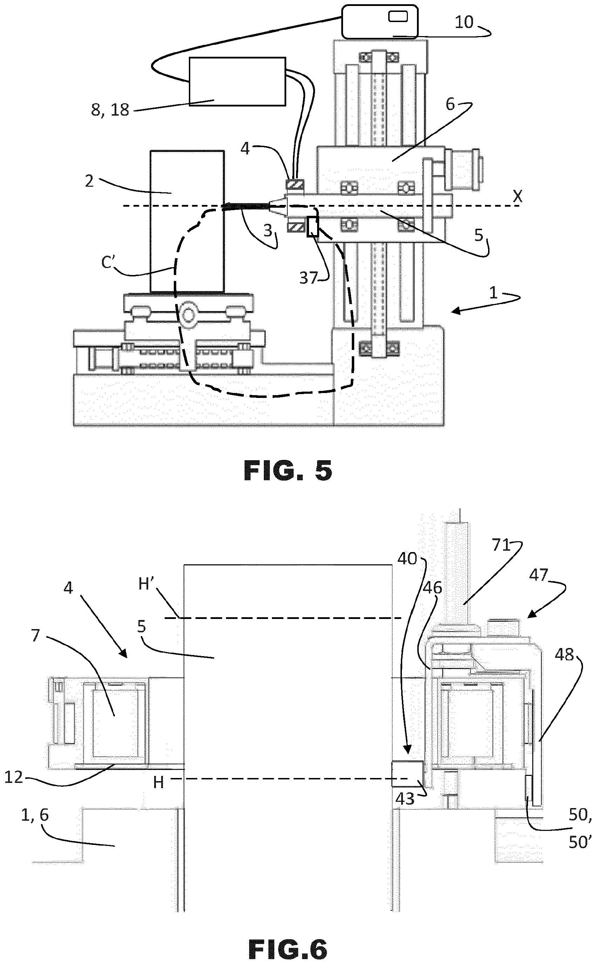

Figure 5 shows an alternative solution to that of figure 1. In particular, in the embodiment of figure 5, a secondary circuit C' does not close through the bearings of the spindle 6 which allow the rotation of the shaft 5, but through a special contact mechanism, schematized with reference 37, which creates a (direct) electrical connection between the shaft 5 and a part of the support structure 1 of the machine tool, for example the spindle 6. This allows to avoid problems due to the reduced electrical conductivity of the bearings during the rotation of the shaft 5 and to use the system according to the present invention in the case of zero electrical conductivity, for example in the case of bearings made of ceramic material.

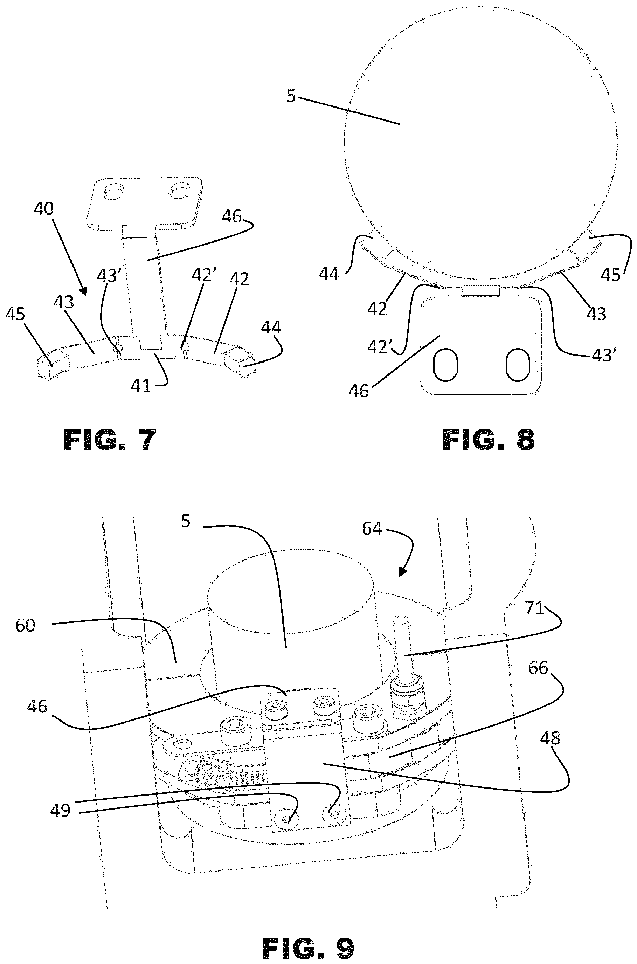

The contact mechanism, visible in figures 6, 7 and 8, includes a sliding element, or sliding shoe 40 which comes into direct contact with the rotating shaft 5. The sliding shoe 40 may have particular characteristics of shape and material. In particular, the sliding shoe 40 is made of a conductive and low oxidation material, such as stainless steel or bronze, or a combination of the two, and guarantees good electrical conductivity and wear resistance. Other materials can be used for making the sliding shoe 40, for example graphite and silver-graphite. The sliding shoe 40 is rigidly connected to the support structure 1 and comprises at least one elastically yielding portion. In particular, in the embodiment illustrated in figures 7 and 8, the sliding shoe 40 has a central body 41 rigidly connected to the support structure 1 and two limbs 42 and 43 connected substantially symmetrically to the central body 41 by means of elastically yielding portions or zones 42' and 43' and featuring free ends intended to remain in contact with the shaft 5, in particular at two points of a cross section H of the shaft 5, while the latter rotates around the axis X. The sliding shoe 40 preferably comprises a folded piece, made for example of stainless steel, which defines the central body 41, the limbs 42 and 43, and, in correspondence with the folds, the elastically yielding zones 42' and 43'. In a preferred embodiment, the sliding shoe 40 comprises two blocks or pads 44 and 45, for example in bronze, which define the free ends of the limbs 42 and 43 in contact with the rotating shaft 5. In correspondence of at least one of the folds it can also be provided a lightening of material, as shown in figure 7 to increase the elastic compliance of the zones 42' and 43'.

According to a possible embodiment, the sliding shoe 40 is connected to the support structure 1 in an adjustable way, for example as illustrated in figure 6 which shows a connection assembly of the sliding shoe 40 to the support structure 1, in particular to the spindle 6, with an adjustable bracket 46 integral with the sliding shoe 40 and a reference bracket 48 (partially shown also in figure 9), the adjustable bracket 46 and the reference bracket 48 being connected to each other by means of adjustment elements with a coupling 47 including screws in slots. The connection assembly also comprises elements for fixing the reference bracket 48 to the support structure, for example screws 49 with a conical profile head (visible in figure 9) and other adjustment elements with a spacer 50 interposed between the reference bracket 48 and the support structure 1 in correspondence with the fixing by means of the screws 49. The thickness of the spacer 50 is chosen to determine the desired contact force between the sliding shoe 40 and the shaft 5.

In particular, a procedure for registering the position of the sliding shoe 40 - in the layout schematized in figure 6 - provides for
- fixing the reference bracket 48 to the spindle 6 or to the support structure 1 by tightening the screws 49 after having inserted a calibration spacer 50' of a known thickness D',
- bringing the ends 44 and 45 of the limbs 42 and 43 of the sliding shoe 40 into contact with the surface of the shaft 5 with negligible contact force, nominally zero,
- fixing the mutual position between the adjustable bracket 46 and the reference bracket 48 by tightening the coupling 47,
- releasing the connection between the reference bracket 48 and the support structure 1,
- removing the calibration spacer 50' and inserting a working spacer 50 with a thickness D less than D', where the difference in thickness ΔD = D'-D is chosen according to the contact force that is desired to be present between the sliding shoe 40 and the shaft 5. The spacers 50 and 50' are therefore interchangeable to vary the radial position of the sliding shoe 40 with respect to the rotating shaft 5, so defining the contact force between the sliding shoe 40 and the shaft 5. According to a variant, the working spacer 50 can be omitted by suitably choosing the thickness of the calibration spacer 50' (D' = ΔD).

The possibility of determining the contact force in a simple and safe way is an important feature because having a reliable control of this quantity allows to get the best combination between the electrical conductivity and the wear resistance of the contact mechanism, and guarantee persistence in time of the proper electrical contact between the parts.

If the contact mechanism is fixed to a surface of the support structure 1 oriented in the opposite direction with respect to what is shown in figure 6, the final part of the adjustment procedure involves inserting a working spacer 50 of greater (rather than less) thickness than that of the calibration spacer 50' to obtain the desired contact force. In this alternative arrangement it can also be envisaged not to insert any calibration spacer 50' in the first part of the procedure, and a working spacer 50 of a certain thickness (D = ΔD).

In the particular embodiment of figure 6, the sliding shoe 40 is arranged between the shaft 5 and the annular core 7 of the inductor 4. The assembly and adjustment operations of the contact mechanism are generally carried out before inserting the inductor 4.

The particular symmetrical structure of the sliding shoe 40 and the adjustable fixing to the support structure 1 of the machine tool (for example to the spindle 6) guarantee an effective electrical connection between the spindle 5 and the support structure 1 regardless of the rotation speed of the shaft 5 and the direction of rotation.

The sliding shoe 40 can have a folded piece with a particularly small thickness (for example 0.2 mm). In this case, it may not be necessary to provide for the possibility of adjusting the position and the fastening of the sliding shoe 40 to the support structure 1, since the characteristics of compliance of the sliding shoe 40 itself, in particular of the folded piece that defines the central body 41 and the limbs 42, 43, are sufficient to ensure the correct contact, stable but with not excessive force, between the free ends of the limbs 42 and 43 (in the illustrated example bearing the pads 44, 45) and the rotating shaft 5 and therefore the effective electrical connection between the shaft 5 and the support structure 1.

The construction of the contact mechanism described up to now and shown in figure 6 is particularly compact and advantageous as regards the reduction of the overall dimensions, due to the particular shape of the components such as the reference bracket 48 and the adjustable bracket 46. Variations are however possible, for example solutions in which the sliding shoe 40 is fixed to the spindle 6 or to the support structure 1 in such a way as to cooperate with the rotating shaft 5 in correspondence with a different section, for example the section indicated in Figure 6 with the reference H', or in a different area which is in any case such as to ensure that the loop C' generated when the tool 3 touches the workpiece 2 passes through the inductor 4.

Another aspect of the invention concerns the structure of the core of the inductor 4.

As mentioned above, the inductor 4 comprises a core 7 of ferromagnetic material (for example ferrite) having an annular, for example toroidal, shape and windings 9, with a certain number of coils of copper wire, wound around a portion of the annular core 7.

Preferably the inductor 4 also comprises a shell 12, partially visible in figures 6 and 9, which houses the core 7 and the windings 9. The shell 12 is generally made of non-magnetic stainless steel and allows the inductor 4 to be fixed to the spindle 6 or to another part of the support structure 1 of the machine tool, arranged in any case coaxially to the axis X of the rotating shaft 5. The fixing is carried out in a per se known way, for example by means of screws as can be seen only partially in figure 9, and is not described in detail for reasons of simplicity.

In known applications, the inductor 4 is made in one piece, and in particular the annular core 7 is in one piece and the shell 12 is in one piece. The annular core 7 in one piece of material has the homogeneity properties which guarantee the correct behaviour of the inductor 4 within the system. However, at least for some applications, the installation of the inductor 4 in the machine tool is complex, and it is particularly complex - or impossible at all - to apply the checking system to already existing and completely assembled machine tools, an application that requires to mount the inductor 4 on the shaft 5 in a machine with certain dimensions and unavoidable mechanical limitations of the access to the various components.

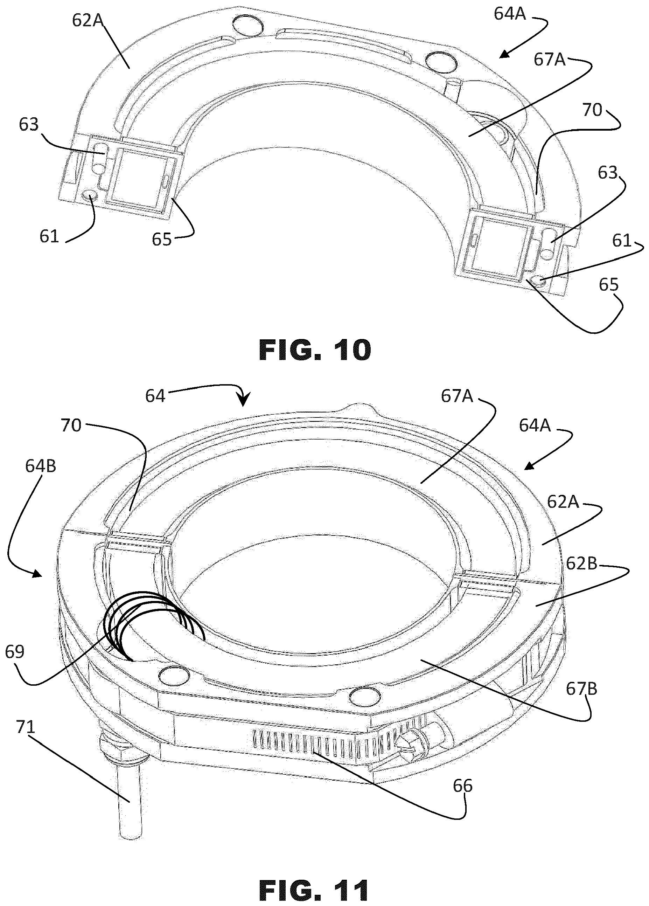

Figure 11 shows an inductor 64 in which the annular core is made of two portions in ferromagnetic material which have open ends and which are joined at these ends. The inductor 64 is used in a checking system according to the present invention, a system which also includes the features already described with reference to figure 1.

The inductor 64 comprises two mutually connected half-rings 64A and 64B, each comprising in turn a semi-annular portion in ferromagnetic material, typically ferrite, 67A and 67B and a substantially C-shaped half-shell 62A and 62B. Windings, schematically represented in figure 11 and indicated with reference number 69, are wound on the ferrite semi-annular portion in ferrite of one of the half-rings, in particular on the portion 67B, and are connected to electric wires which come out of the half-ring 64B inside the cable 71. Four reference pins 63 are fixed to the ends of the half-shells and cooperate with holes 61 present at the ends of the other half-shell. In the embodiment illustrated in figures 10 (showing the half-ring 64A) and 11, the ends of each half-shell 62A and 62B have each a reference pin 63 and a hole 61 but different configurations are possible (for example: all four pins 63 at the ends of one of the two half-shells 62A or 62B and the four holes 61 at the ends of the other; or a pair of pins 63 and one of holes 61 at the two ends of each half-shell 62A or 62B; etc.).

The pins 63 and the holes 61 represent mechanical references which can be made in different ways, with suitable and per se known elements and/or surfaces, configured to align the ends of the half-rings 64A and 64B.

In correspondence of each of the two areas of junction between the half-rings 64A and 64B, that is in correspondence with each pair of ends of the half-rings 64A and 64B facing each other, there is a suitably profiled gasket 65. In figure 10 both gaskets 65 are shown coupled to the half-ring 64A.

The half-shells 62A and 62B are closed in the upper part (with reference to the orientation of figures 10 and 11) by suitable shaped elements 60, generally in plastic, which are partially visible in figure 9 but omitted for reasons of clarity in figures 10 and 11 .

The installation of the inductor 64 on the machine tool, for example the one schematically represented in figure 1, takes place by arranging the two half-rings 64A and 64B in a suitable position, around the shaft 5 of the spindle 6, with their respective ends facing each other, positioned by means of the reference pins 63 and the respective holes 61, and fastened to each other, for example by means of screws or other fastening devices. In the example of figure 11, these fastening devices comprise a metal collar 66 closed and fastened by a screw, the metal collar 66 having the particularity of uniformly distributing the load over the entire external surface of the half-shells 62A and 62B, making the joint stable and insensitive to shocks and vibrations to which the spindle 6 is subject.

Each of the semi-annular portions of ferrite 67A and 67B is housed with clearance in the respective half-shell 62A and 62B so that, before carrying out the installation, the respective ends, featuring a flat surface, slightly protrude from the free ends of the half-shells 62A and 62B. A resin 70 with good elastic features is present inside each half-shell 62A and 62B, between the semi-annular portions of ferrite 67A and 67B and the internal walls of the half-shells 62A and 62B. During the tightening process - carried out by acting on the fastening device 66 - the ends of the half shells 62A and 62B are brought close to each other to cause the ends of the semi-annular portions in ferromagnetic material 67A and 67B to mutually contact and then the mechanical references 61, 63 are brought into mutual contact so coupling the free ends of the half-shells 62A and 62B. Then the tightening continues and is completed when the mechanical stop defined by the compression of the gaskets 65 between the ends of the half-shells 62A and 62B occurs. In this last phase, that is after the contact between the semianular portions of ferrite 67A and 67B, there is a limited sliding of the latter inside the respective half-shells 62A and 62B which is allowed by the elasticity of the resin 70 present at the inside of the half-shells 62A and 62B.

The elasticity of the resin 70, in addition to allowing the aforementioned sliding, also applies a constant thrust between the two semi-annular portions of ferrite 67A, 67B, a fundamental condition for the proper functioning of the system and its reliability over time.

The gaskets 65 close the space between the ends of the half-shells 62A and 62B and prevent the entry of dust or other foreign bodies which, infiltrating between the end surfaces of the semi-annular portions of ferrite 67A and 67B, could alter and jeopardize the correct electromagnetic behaviour inductor 64.

The structure of the inductor 64 in two parts, mutually coupled as described above, guarantees a repeatable assembly and the proper functioning of the system, without substantial differences as regards the electromagnetic behaviour with respect to the known solution in which the annular core 7 is made in a single piece. Furthermore, this structure allows the application of the checking system in situations in which it would not be physically possible to arrange the inductor 4 in one piece around the rotating shaft 5.

A method of mounting the inductor 64 on a machine tool, in particular around the rotating shaft 5 of the spindle 6 of a machine tool, provides for fixing one of the half-shells 62A, 62B to the support structure 1, for example fixing the half-shell 62B to the spindle 6 with screws, as shown in figure 9, and proceed as described above, that is:
- arrange the half-rings 64A, 64B so that the ends of the semi-annular portions in ferromagnetic material 67A, 67B slightly protrude from the free ends of the respective half-shells 62A, 62B,
- bring the ends of the half-rings 62A, 62B close to each other to cause the ends of the semi-annular portions in ferromagnetic material 67A, 67B to mutually contact and bring the mechanical references 61, 63 to the free ends of the half-shells 62A, 62B into mutual cooperation,
- fasten the half-shells 62A, 62B together up to the stop by acting on the fastening devices, in particular on the collar 66, causing a compression of the elastic resin 70 inside the half-shells 62A, 62B.

## Claims

1. Checking system for checking the integrity of a tool (3) during the machining of a metal piece (2) on a machine tool comprising a support structure (1, 6) and a tool holder (5) which carries the tool (3), the checking system includes
- a detection circuit (4, 8; 18; 64) adapted to generate a detection signal indicative of the contact between the tool (3) and the metal piece (2), with at least one power source (11; 21, 22) and an inductor (4; 64) comprising an annular core (7; 67A, 67B) arranged at the tool holder (5) and windings (9; 69) wound on said annular core (7; 67A, 67B), and
- a control unit (10) connected to the detection circuit (4, 8; 18; 64),
the checking system being **characterized in that**
the detection circuit (4, 8; 18; 64) has a half-bridge configuration with two resistive branches powered by AC voltages that are substantially 90° out of phase with respect to each other and respectively comprising said inductor (4; 64) and a reference resistor (25), and a detection branch with a conversion unit (27) and a processing unit (30) for generating and transmitting said detection signal to the control unit (10).

2. Checking system according to claim 1, wherein the reference resistor (25) has a resistance substantially equal to the impedance of the inductor (4; 64).

3. Checking system according to claim 1 or claim 2, wherein the conversion unit (27) is an RMS converter (27).

4. Checking system according to claim 3, wherein the RMS converter (27) has low average time constant.

5. Checking system according to any one of the preceding claims, wherein the detection branch comprises an analog-to-digital converter (28) between said conversion unit (27) and processing unit (30).

6. Checking system according to any one of the preceding claims, wherein said processing unit (30) is a microprocessor.

7. Checking system according to any one of the preceding claims, wherein the annular core of the inductor (64) is made of two portions in ferromagnetic material (67A, 67B) which have open ends and are configured to be joined at said ends, said windings (69) of the inductor (64) being wound on one (67B) of said portions in ferromagnetic material.

8. Checking system according to claim 7, wherein said two portions of ferromagnetic material are semi-annular portions of ferrite.

9. Checking system according to claim 7 or claim 8, wherein the inductor (64) comprises two half-rings (64A, 64B) configured to be mutually connected, each of which comprises a half-shell (62A, 62B) which houses one of said two portions of ferromagnetic material (67A, 67B) and which is adapted to be coupled to the other half-shell (62A, 62B).

10. Checking system according to claim 9, wherein each half-shell (62A, 62B) defines two free ends with mechanical references (61, 63) configured to cooperate with the mechanical references (61, 63) of the other half-shell (62A, 62B), the inductor (64) comprising fastening devices (66) configured to fasten the two half-rings (64A, 64B) to each other.

11. Checking system according to claim 10, wherein said fastening devices comprise a metal collar (66).

12. Checking system according to any one of claims 9 to 11, wherein an elastic resin (70) is present inside each half-shell (62A, 62B).

13. Checking system according to any one of the preceding claims, for checking a tool (3) rotating around a rotation axis (X), wherein the tool holder comprises a shaft (5) rotating around said rotation axis (X), the annular core (7; 67A, 67B) of the inductor (4; 64) being arranged around said rotation axis (X).

14. Checking system according to claim 13, which further comprises a contact mechanism (37) adapted to provide an electrical connection between the rotating shaft (5) and the support structure (1, 6) of the machine tool, wherein the contact mechanism (37) comprises a sliding shoe (40) that is rigidly connected to the support structure (1, 6) and adapted to remain in contact with the rotating shaft (5).

## Patentansprüche

1. Prüfsystem zur Überprüfung der Integrität eines Werkzeugs (3) während der Bearbeitung eines Metallstücks (2) auf einer Werkzeugmaschine, die eine Tragstruktur (1, 6) und einen Werkzeughalter (5) umfasst, der das Werkzeug (3) trägt, wobei das Prüfsystem umfasst:
- eine Detektionsschaltung (4, 8; 18; 64), die dazu ausgelegt ist, ein Detektionssignal zu erzeugen, das den Kontakt zwischen dem Werkzeug (3) und dem Metallstück (2) anzeigt, mit mindestens einer Leistungsquelle (11; 21, 22) und einem Induktor (4; 64), der einen ringförmigen Kern (7; 67A, 67B), der am Werkzeughalter (5) angeordnet ist, und Wicklungen (9; 69) umfasst, die um den ringförmigen Kern (7; 67A, 67B) gewickelt sind, und
- eine Steuereinheit (10), die mit der Detektionsschaltung (4, 8; 18; 64) verbunden ist,
wobei das Prüfsystem **dadurch gekennzeichnet ist, dass**
die Detektionsschaltung (4, 8; 18; 64) eine Halbbrückenkonfiguration mit zwei Widerstandszweigen, die durch AC-Spannungen gespeist werden, die in Bezug aufeinander im Wesentlichen um 90° phasenverschoben sind, und den Induktor (4; 64) bzw. einen Referenzwiderstand (25) umfassen, und einem Detektionszweig mit einer Umwandlungseinheit (27) und einer Verarbeitungseinheit (30) zum Erzeugen und Übertragen des Detektionssignals an die Steuereinheit (10) aufweist.

2. Prüfsystem nach Anspruch 1, wobei der Referenzwiderstand (25) einen Widerstand aufweist, der im Wesentlichen gleich der Impedanz des Induktors (4; 64) ist.

3. Prüfsystem nach Anspruch 1 oder 2, wobei die Umwandlungseinheit (27) ein RMS-Wandler ist.

4. Prüfsystem nach Anspruch 3, wobei der RMS-Wandler (27) eine niedrige durchschnittliche Zeitkonstante aufweist.

5. Prüfsystem nach einem der vorhergehenden Ansprüche, wobei der Detektionszweig einen Analog-Digital-Wandler (28) zwischen der Umwandungseinheit (27) und der Verarbeitungseinheit (30) umfasst.

6. Prüfsystem nach einem der vorhergehenden Ansprüche, wobei die Verarbeitungseinheit (30) ein Mikroprozessor ist.

7. Prüfsystem nach einem der vorhergehenden Ansprüche, wobei der ringförmige Kern des Induktors (64) aus zwei Abschnitten aus ferromagnetischen Material (67A, 67B) hergestellt ist, die offene Enden aufweisen und dazu ausgebildet sind, an den Enden verbunden zu werden, wobei die Wicklungen (69) des Induktors (64) um einen (67B) der Abschnitte aus ferromagnetischem Material gewickelt sind.

8. Prüfsystem nach Anspruch 7, wobei die beiden Abschnitte aus ferromagnetischem Material halbringförmige Abschnitte aus Ferrit sind.

9. Prüfsystem nach Anspruch 7 oder 8, wobei der Induktor (64) zwei Halbringe (64A, 64B) umfasst, die dazu ausgebildet sind, miteinander verbunden zu werden und jeweils eine Halbschale (62A, 62B) umfassen, die einen der zwei Abschnitte aus ferromagnetischem Material (67A, 67B) aufnimmt und die dazu ausgelegt ist, mit der anderen Halbschale (62A, 62B) gekoppelt zu werden.

10. Prüfsystem nach Anspruch 9, wobei die Halbschale (62A, 62B) zwei freie Enden mit mechanischen Referenzen (61, 63) definiert, die dazu ausgebildet sind, mit den mechanischen Referenzen (61, 63) der anderen Halbschale (62A, 62B) zusammenzuwirken, wobei der Induktor (64) Befestigungsvorrichtungen (66) umfasst, die dazu ausgebildet sind, die beiden Halbringe (64A, 64B) aneinander zu befestigen.

11. Prüfsystem nach Anspruch 10, wobei die Befestigungsvorrichtungen (66) einen Metallkranz umfassen.

12. Prüfsystem nach einem der Ansprüche 9 bis 11, wobei ein elastisches Harz (70) innerhalb jeder Halbschale (62A, 62B) vorhanden ist.

13. Prüfsystem nach einem der vorhergehenden Ansprüche zum Überprüfen eines Werkzeugs (3), das sich um eine Drehachse (X) dreht, wobei der Werkzeughalter eine Welle (5) umfasst, die sich um die Drehachse (X) dreht, wobei der ringförmige Kern (7; 67A, 67B) des Induktors (4; 64) um die Drehachse (X) angeordnet ist.

14. Prüfsystem nach Anspruch 13, das ferner einen Kontaktmechanismus (37) umfasst, der dazu ausgelegt ist, eine elektrische Verbindung zwischen der drehenden Welle (5) und der Trägerstruktur (1, 6) der Werkzeugmaschine bereitzustellen, wobei der Kontaktmechanismus (37) einen Gleitschuh (40) umfasst, der starr mit der Trägerstruktur (1, 6) verbunden und dazu ausgelegt ist, mit der drehenden Welle (5) in Kontakt zu bleiben.

## Revendications

1. Système de vérification permettant de vérifier l'intégrité d'un outil (3) pendant l'usinage d'une pièce métallique (2) sur une machine-outil comprenant une structure de support (1, 6) et un porte-outil (5) qui porte l'outil (3), le système de vérification comprend
- un circuit de détection (4, 8 ; 18 ; 64) conçu pour générer un signal de détection révélateur du contact entre l'outil (3) et la pièce métallique (2), avec au moins une source d'alimentation (11 ; 21, 22) et un inducteur (4 ; 64) comprenant un noyau annulaire (7 ; 67A, 67B) disposé au niveau du porte-outil (5) et des enroulements (9 ; 69) enroulés sur ledit noyau annulaire (7 ; 67A, 67B), et
- une unité de commande (10) connectée au circuit de détection (4, 8 ; 18 ; 64),
le système de vérification étant **caractérisé en ce que** le circuit de détection (4, 8 ; 18 ; 64) a une configuration en demi-pont avec deux branches résistives alimentées par des tensions alternatives qui sont sensiblement déphasées de 90° l'une par rapport à l'autre et comprenant respectivement ledit inducteur (4 ; 64) et une résistance de référence (25), et une branche de détection dotée d'une unité de conversion (27) et d'une unité de traitement (30) pour générer et transmettre ledit signal de détection à l'unité de commande (10).

2. Système de vérification selon la revendication 1, dans lequel la résistance de référence (25) a une résistance sensiblement égale à l'impédance de l'inducteur (4 ; 64).

3. Système de vérification selon la revendication 1 ou la revendication 2, dans lequel l'unité de conversion (27) est un convertisseur RMS (27).

4. Système de vérification selon la revendication 3, dans lequel le convertisseur RMS (27) a une constante de temps moyenne faible.

5. Système de vérification selon l'une quelconque des revendications précédentes, dans lequel la branche de détection comprend un convertisseur analogique/numérique (28) entre ladite unité de conversion (27) et unité de traitement (30).

6. Système de vérification selon l'une quelconque des revendications précédentes, dans lequel ladite unité de traitement (30) est un microprocesseur.

7. Système de vérification selon l'une quelconque des revendications précédentes, dans lequel le noyau annulaire de l'inducteur (64) est constitué de deux parties en matériau ferromagnétique (67A, 67B) qui présentent des extrémités ouvertes et sont conçues pour être jointes au niveau desdites extrémités, lesdits enroulements (69) de l'inducteur (64) étant enroulés sur l'une (67B) desdites parties en matériau ferromagnétique.

8. Système de vérification selon la revendication 7, dans lequel lesdites deux parties de matériau ferromagnétique sont des parties semi-annulaires de ferrite.

9. Système de vérification selon la revendication 7 ou la revendication 8, dans lequel l'inducteur (64) comprend deux demi-anneaux (64A, 64B) configurés pour être reliés l'un à l'autre, dont chacun comprend une demi-coque (62A, 62B) qui abrite l'une desdites deux parties de matériau ferromagnétique (67A, 67B) et qui est conçue pour être accouplée à l'autre demi-coque (62A, 62B) .

10. Système de vérification selon la revendication 9, dans lequel chaque demi-coque (62A, 62B) délimite deux extrémités libres avec des références mécaniques (61, 63) conçues pour coopérer avec les références mécaniques (61, 63) de l'autre demi-coque (62A, 62B), l'inducteur (64) comprenant des dispositifs de fixation (66) conçus pour fixer les deux demi-anneaux (64A, 64B) l'un à l'autre.

11. Système de vérification selon la revendication 10, dans lequel lesdits dispositifs de fixation comprennent un collier métallique (66).

12. Système de vérification selon l'une quelconque des revendications 9 à 11, dans lequel une résine élastique (70) est présente à l'intérieur de chaque demi-coque (62A, 62B).

13. Système de vérification selon l'une quelconque des revendications précédentes, pour la vérification d'un outil (3) tournant autour d'un axe de rotation (X), dans lequel le porte-outil comprend un arbre (5) tournant autour dudit axe de rotation (X), le noyau annulaire (7 ; 67A, 67B) de l'inducteur (4 ; 64) étant disposé autour dudit axe de rotation (X).

14. Système de vérification selon la revendication 13, qui comprend en outre un mécanisme de contact (37) conçu pour fournir une connexion électrique entre l'arbre rotatif (5) et la structure de support (1, 6) de la machine-outil, dans lequel le mécanisme de contact (37) comprend un patin coulissant (40) qui est relié de manière rigide à la structure de support (1, 6) et conçu pour rester en contact avec l'arbre rotatif (5).
